Europäisches Patentamt

European Patent Office

Office européen des brevets

(11) Publication number: **0 526 636 A1**

# EUROPEAN PATENT APPLICATION
## published in accordance with Art. 158(3) EPC

㉑ Application number: **91904653.2**

㉒ Date of filing: **26.02.91**

⑧⑥ International application number:
**PCT/JP91/00243**

⑧⑦ International publication number:
**WO 92/15172 (03.09.92 92/23)**

㊽ Int. Cl.⁵: **H04N 5/225**, H04N 5/232,
H04N 9/04, G02B 27/46,
G03B 17/14

㊸ Date of publication of application:
**10.02.93 Bulletin 93/06**

㊻ Designated Contracting States:
**DE DK ES FR GB GR IT LU NL SE**

㋛ Applicant: **MATSUSHITA ELECTRIC
INDUSTRIAL CO., LTD.**
**1006, Oaza Kadoma**
**Kadoma-shi, Osaka-fu, 571(JP)**

㋑ Inventor: **HORIGUCHI, Syuichi**
**26-34, Kashiwacho Asahi-ku**
**Yokohama-shi Kanagawa 241(JP)**

㋜ Representative: **Patentanwälte Leinweber &
Zimmermann**
**Rosental 7/II Aufg.**
**W-8000 München 2(DE)**

㋔ **LENS FOR TELEVISION CAMERA.**

㋘ A lens for a television camera which is provided with a lens part (1) having a lens for a color camera, a transparent parallel plane body (2) having parallel planes which is provided behind the lens part (1), and a ring-like plate (5) mounted on a mount seat (16) of the lens part (1).

FIG. 1

TECHNICAL FIELD

This invention relates to a lens for a television camera used in a monitoring television camera system or the like.

BACKGROUND ART

A television camera lens of this type has conventionally been designed to be used specially for either a color camera or a monochrome camera. Namely, unless a lens for a color camera and a lens for a monochrome camera are used in a color television camera and a monochrome television camera, respectively, the optical performance is degraded. Nevertheless, there has been an example in which a camera is adapted for use commonly as the color camera and the monochrome camera even at the sacrifice of the performance. Usually, however, in the case of using a high-speed lens (a lens having an F-value of less than 1.0) in a monitoring television camera system or the like, the special-purpose lenses, for the color camera and the monochrome camera, which are distinct from each other are needed respectively for the above-mentioned reason.

Conventional examples will now be described with reference to the drawings.

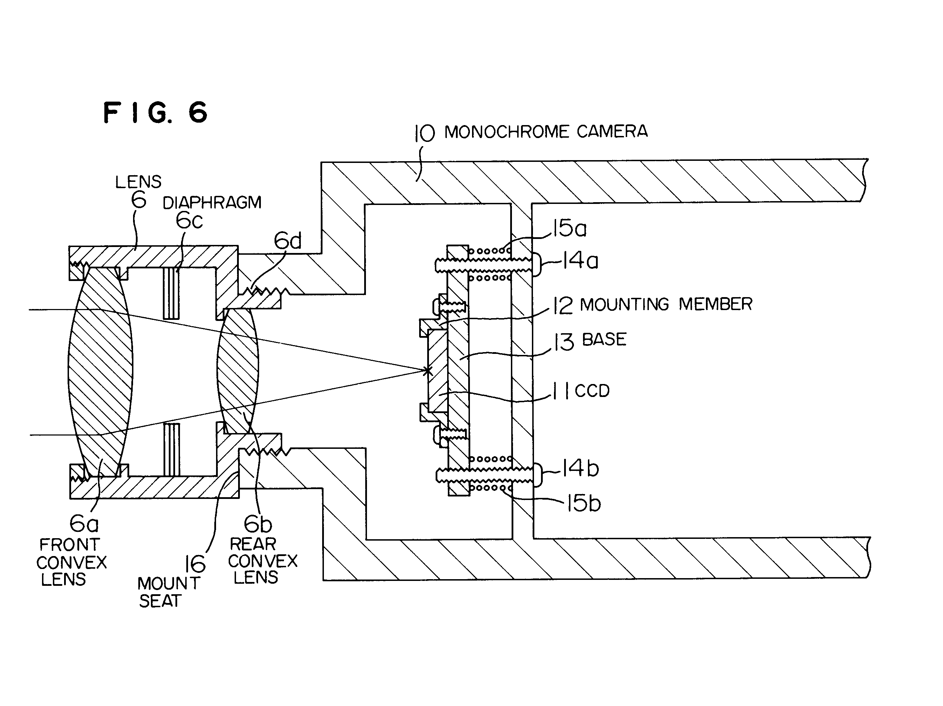

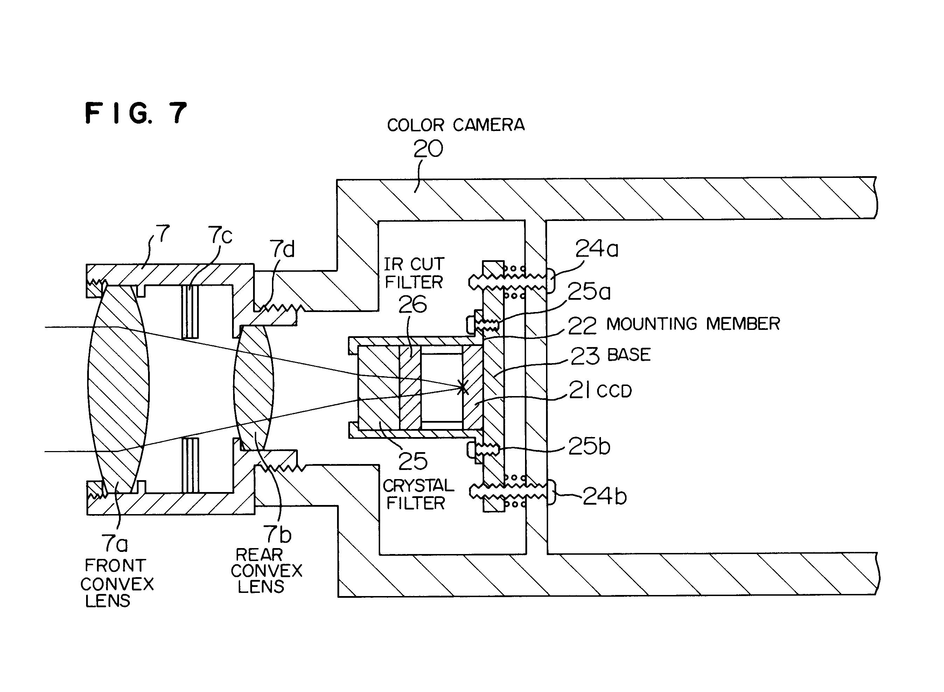

Fig. 6 is a sectional view showing a conventional monochrome camera lens attached to a monochrome camera, and Fig. 7 is a sectional view showing a conventional color camera lens attached to a color camera.

In Fig. 6, 6 denotes a lens whose optical performance or quality is set for a monochrome camera, which lens comprises a front convex lens 6a, a rear convex lens 6b and a diaphragm 6c. 10 denotes a monochrome camera, 11 a solid-state image pick-up device such as a charge-coupled device (hereinafter referred to as "CCD"), 12 a mounting member, and 13 a base. The CCD 11, which is a light-receiving element for the monochrome camera 10, is secured by screws to the base 13 through the mounting member 12. The base 13 is mounted on the monochrome camera 10 by a flange-back adjuster which comprises screws 14a, 14b and springs 15a, 15b. The lens 6 and the monochrome camera 10 are connected with each other by a threaded portion 6d.

In Fig. 7, 7 denotes a lens whose optical performance or quality is set for a color camera, which lens comprises a front convex lens 7a, a rear convex lens 7b and a diaphragm 7c. 20 denotes a color camera, 21 a CCD for the color camera, 22 a mounting member, and 23 a base. A crystal filter 25 necessary for the single-plate frequency separation-type color camera and an IR cut filter 26 are further provided. The crystal filter 25 and the IR cut filter 26 are mounted on the front side of the color camera CCD 21 by the mounting member 22. The lens 7 and the color camera 20 are connected with each other by a threaded portion 7C.

Next, optical paths for incident lights of the above conventional examples will now be described. Referring first to Fig. 6, in the case of a CS mount system, a distance up to the light receiving surface, that is, effective distance from a mount seat 16 of the camera body to the CCD 11, is set to 12.5 mm in terms of a conversion or reduction in the air. This is called the flange-back distance in the CS mount, and in so far as any standard lens is used in a designated camera, the focusing can be achieved even when the lens is exchanged, if this distance is maintained. Namely, as shown in Fig. 6, the light, incident on the front surface of the lens 6 which is the monochrome camera lens, is refracted by a group of lenses 6a, 6b constituting the lens 6, and reaches the light receiving surface of the CCD 11. In this case, however, the monochrome camera lens is attached to the monochrome television camera, and therefore if the flange-back distance is set to 12.5 mm (in the case of the CS mount) in terms of the conversion in the air, the incident light is focused on the light receiving surface of the CCD 11 as described above, thereby enabling the focusing.

Similarly, in Fig. 7, the light incident on the front surface of the lens 7 is refracted by a group of lenses 7a, 7b constituting the lens 7, and enters the color camera 20, where the light is further refracted by the crystal filter 25 and the IR cut filter 26, and reaches the light receiving surface of the CCD 21. In this case, also, the color camera lens is attached to the color camera, and therefore if the flange-back distance is set to 12.5 mm (in the case of the CS mount) in terms of the conversion in the air, the focusing on the light receiving surface of the CCD 21 is achieved, thereby enabling the focusing.

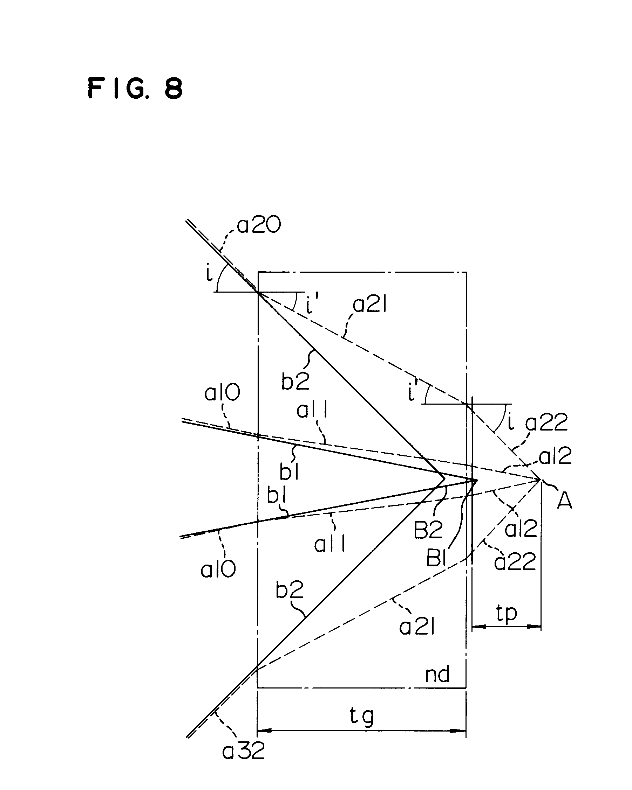

Next, explanation will be made of the optical performance, obtained, for example, when the color camera lens is attached to each of the color camera and the monochrome camera. In Fig. 8, broken lines indicate the optical paths in a case where the color camera lens is attached to the color camera, with the diaphragm opened, while solid lines indicate the optical paths in a case where the color camera lens is attached to the monochrome camera, with the diaphragm opened. Further, in the case of the color camera, since there are provided the crystal filter and the IR cut filter, these are indicated by dot-and-dash lines. And, the refractive index estimated from the characteristics of the above two kinds of filters is designated by nd, the plate thickness is designated by tg, the incident angle is designated by i, and the refractive angle is designated by i'.

In Fig. 8, in the case where the color camera is attached to the lens whose optical performance is set for the color camera, the light $a_{10}$, $a_{11}$, $a_{12}$ passing in the vicinity of the optical axis, as well as the light $a_{20}$, $a_{21}$, $a_{22}$ passing in the vicinity of the diaphragm, are respectively by the optical filter (collectively representing the crystal filter and the IR cut filter), and are respectively converged on the optical axis. Since the optical performance is set for the color camera, the point of convergence of the light $a_{20}$, $a_{21}$, $a_{22}$ - (which has passed in the vicinity of the optical axis) on the optical axis coincides with the point of convergence of the light $a_{20}$, $a_{21}$, $a_{22}$ (which has passed in the vicinity of the diaphragm) on the optical axis. This convergence point is indicated by A. (There is no spherical aberration.)

On the other hand, in the case where the monochrome camera is attached to the lens whose optical performance is set for the color camera, $b_1$ passing in the vicinity of the optical axis, as well as the light $b_2$ passing in the vicinity of the diaphragm, converges on the optical axis without being refracted, because there is no optical filter. The point of convergence of the light $b_1$ (which has passed in the vicinity of the optical axis) on the optical axis is indicated by $B_1$, while the point of convergence of the light $b_2$ (which has passed in the vicinity of the diaphragm) on the optical axis is indicated by $B_2$. $B_1$ and $B_2$ do not coincide with each other. (There is a spherical aberration.)

The above relations are represented by the following equation:

$$nd = \frac{\sin i}{\sin i'}$$

(1) Distance tp between the convergence point $B_1$ of the light passing in the vicinity of the optical axis and A

Since $\sin i \fallingdotseq i$ and $\sin i' \fallingdotseq i'$,

$$tp = \overline{A - B_1} \; \frac{nd - 1}{nd} \; tg \; . \qquad \ldots \ldots \; ①$$

(2) Distance between the convergence point $B_2$ of the light passing in the vicinity of the diaphragm and A

Since $\sin i \neq i$ and $\sin i' \neq i'$,

$$\overline{A - B_2} \neq \frac{nd - 1}{nd} \; tg \; .$$

Therefore, when the color camera lens is attached to the monochrome camera, there has been encountered a problem that the optical performance is degraded, and the wider the diaphragm is opened (in which case the light is incident on the optical filter at a position remote from the optical axis), the more the performance is degraded.

DISCLOSURE OF INVENTION

The present invention seeks to overcome the above problem of the prior art, and an object of the invention is to provide an excellent television camera lens which can be used in both of a color camera and a monochrome camera, and will not degrade the optical performance.

In a first embodiment of the present invention, there are provided a lens, and a transparent parallel plane member having parallel flat surfaces and disposed at a rear side of the lens.

Therefore, according to the first embodiment of the present invention, there is provided an advantage that by detaching/attaching the parallel plane member, the optical performance can be set for either of a color camera and a monochrome camera, and separate lenses specially designed respectively for the color camera and the monochrome camera need not be prepared.

In a second embodiment of the present invention, there are provided a lens, a transparent parallel plane member having parallel flat surfaces and disposed at a rear side of the lens, and a ring-like plate disposed at a portion to which the lens is attached, the ring-like plate changing a flange-back of the lens.

Therefore, according to the second embodiment of the present invention, by detaching/attaching the parallel plane member and the ring-like plate, the optical performance can be set for either a color camera and a monochrome camera, and it is not necessary to prepare separate lenses specially designed respectively for the color camera and the monochrome camera, and in addition in the case of the monochrome camera, there is an advantage that the flange-back need not be re-adjusted.

## BRIEF DESCRIPTION OF THE DRAWINGS

Fig. 1 is a sectional view showing a television camera lens of a first embodiment of the present invention attached to a monochrome camera; Fig. 2 is an exploded perspective view of the same system; Fig. 3 is a sectional view showing the television camera lens of the first embodiment of the present invention attached to a color camera; Fig. 4 is a sectional view showing a television camera lens of a second embodiment of the present invention attached to a monochrome camera; Fig. 5 is an exploded perspective view of the same system; Fig. 6 is a sectional view showing the conventional monochrome camera lens attached to the monochrome camera; Fig. 7 is a sectional view showing the conventional color camera lens attached to the color camera; and Fig. 8 is a schematic view explanatory of the optical paths obtained when the color camera lens is attached to the color camera and the monochrome camera.

## BEST MODE FOR CARRYING OUT THE INVENTION

Embodiments of the present invention will be described below with reference to the drawings.

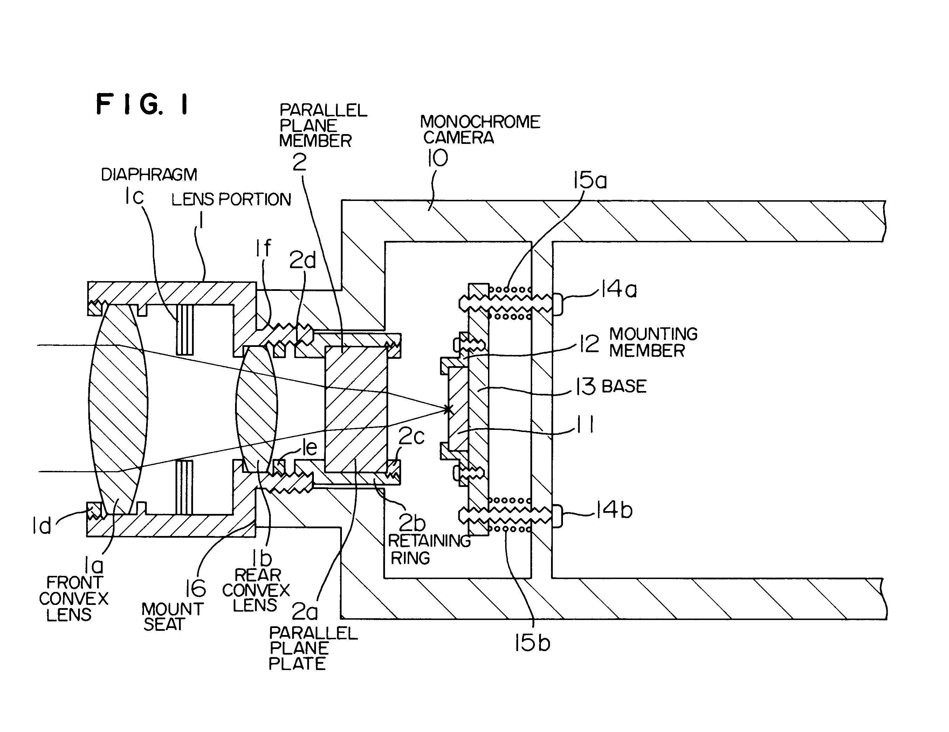

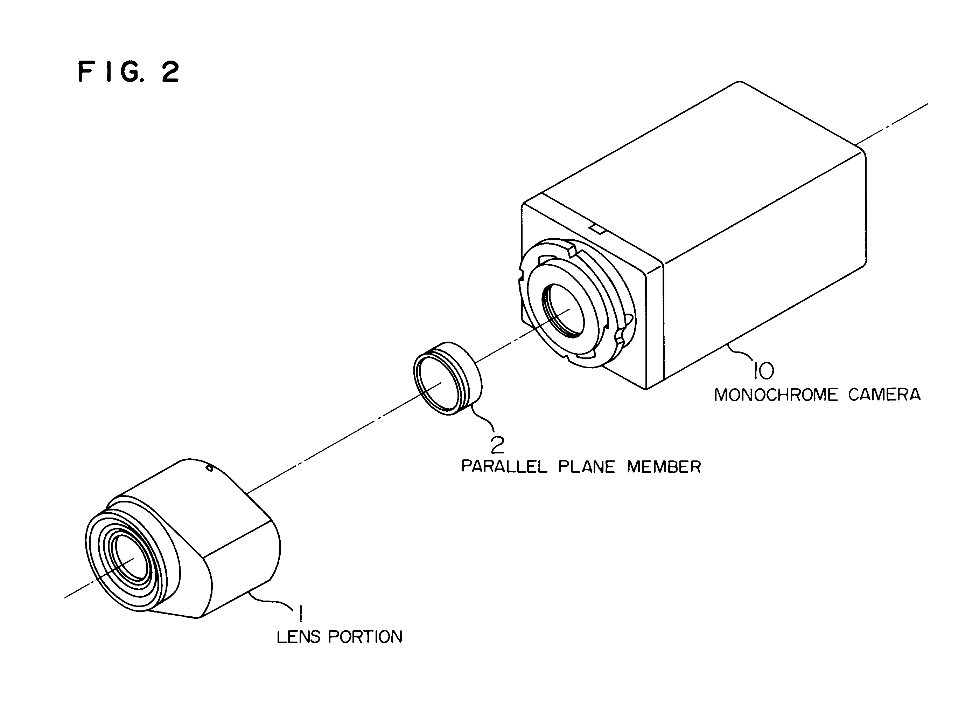

Fig. 1 is a sectional view showing a television camera lens of a first embodiment of the present invention attached to a monochrome camera, and Fig. 2 is an exploded perspective view of the same system.

In Fig. 1, 1 denotes a lens portion whose optical performance is set for a color television camera, and 2 denotes a parallel plane member for correcting the optical performance, such as a spherical aberration, when using a color camera lens in a monochrome camera. 10 denotes a monochrome camera, 11 a CCD for the monochrome camera, 12 a mounting member, and 13 a base.

The lens portion 1 comprises a front convex lens 1a, a rear convex lens 1b, a diaphragm 1c, and holder rings 1d and 1e. The front convex lens 1a is fixed by the holder ring 1d, and the rear convex lens 1b is fixed by the holder ring 1e. Further, the lens portion is fitted in the monochrome camera 10 through a threaded portion 1f.

The parallel plane member 2 is disposed at the rear side of the lens portion 1, and comprises a transparent parallel plane plate 2a, a retaining ring 2b and a holder ring 2c. The parallel plane plate 2a is fixed to the retaining ring 2b by the holder ring 2c. Further, the parallel plane member 2 is fitted in the lens portion 1 through a threaded portion 2d.

The CCD 11 which is a light receiving element for the monochrome camera 10 is secured by screws to the base 13 through the mounting member 12. The base 13 is mounted on the monochrome camera 10 by a flange-back adjuster which comprises screws 13a, 13b and springs 15a, 15b.

In Fig. 2, the parallel plane member 2 is mounted to be positioned between the lens 1 and the monochrome camera 10. When the television camera lens of the invention is to be used in the color camera, the parallel plane member 2 is detached from the lens portion 1, and the lens portion 1 is attached to the color camera.

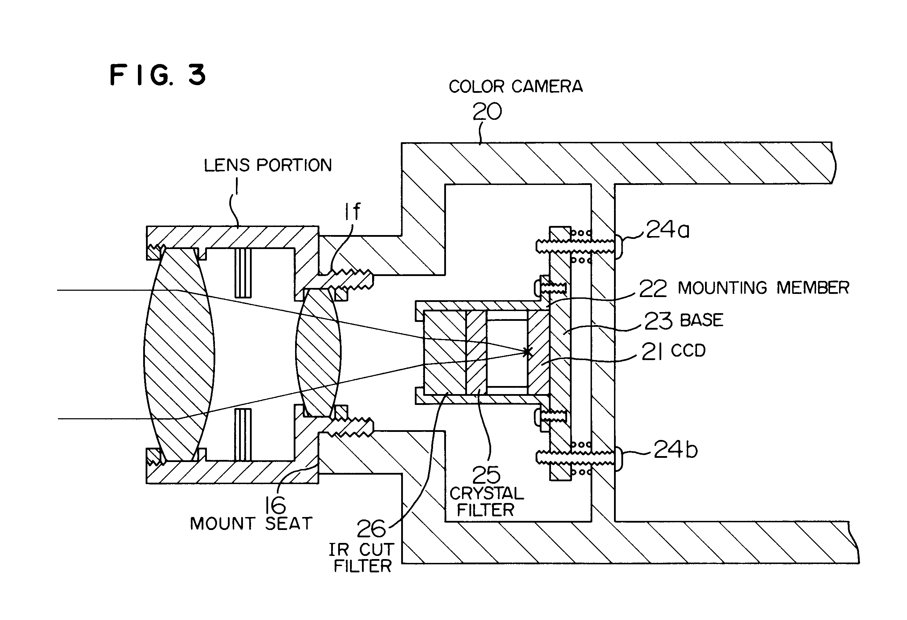

Fig. 3 is a sectional view showing the television camera lens of the first embodiment of the present invention attached to the color camera.

In Fig. 3, 20 denotes the color camera which comprises a CCD 21 for the color camera, a mounting member 22, a base 23, screws 24a, 24b, a crystal filter 25 and an IR cut filter 26. The crystal filter 25 required for the single-plate frequency separation-type color camera, and the IR cut filter 26 are mounted on the front side of the CCD 21 by the mounting member 22.

Next, the optical performance of the parallel plane member will now be described. The parallel plane member is a transparent plane parallel member made of optical glass, and assuming that its refractive index and its plate thickness are represented by nd' and tg', respectively, the relationship of the color camera with the optical filter is represented as follows;

4

$$\frac{nd' - 1}{nd'} \, tg' = \frac{nd - 1}{nd} \, tg = tp \qquad \ldots\ldots ②$$

where nd and tg represent the refractive index and plate thickness of the optical filter of the color camera, respectively.

Therefore, when the parallel plane member which satisfies the formula ② is mounted on the rear side of the lens portion, the spherical aberration is corrected.

Next, the optical path for the incident light of the television camera lens of the first embodiment will now be described. In the case of Fig. 3, since the lens portion 1 whose optical performance is set for the color camera is attached to the color camera 20, the optical performance such as the spherical aberration is satisfied. Further, if the flange-back is set to a required distance (12.5 mm in terms of a conversion in the air in the case of a CS mount), the incident light is converged on the light receiving surface of the CCD 21. Namely, the light incident on the front surface of the lens portion 1 is refracted by a group of lens constituting the lens portion 1, and is further refracted by the crystal filter 25 and the IR cut filter 26, and the incident light is converged on the light receiving surface of the CCD 21. In the case of Fig. 1, the spherical aberration can be corrected by the plane parallel member 2, and therefore the light incident on the front surface of the lens portion 1 is refracted by a group of lens constituting the lens portion 1, and is further refracted by the parallel plane member 2, and the incident light is converted on the optical axis. In this case, as compared with the flange-back for the monochrome camera, the distance is increased by an amount corresponding to the parallel plane member 2, and the distance tp at this time is the same as the above formula ②, and is represented as follows:

$$tp = \frac{nd' - 1}{nd'} \, tg' = \frac{nd - 1}{nd} \, tg \qquad \ldots\ldots ③$$

Therefore, by adjusting the base 13, having the CCD 11 fixed thereto, by the screws 14a, 14b, the flange-back is adjusted so as to achieve the focusing on the light receiving surface of the CCD 11, thereby enabling the focusing.

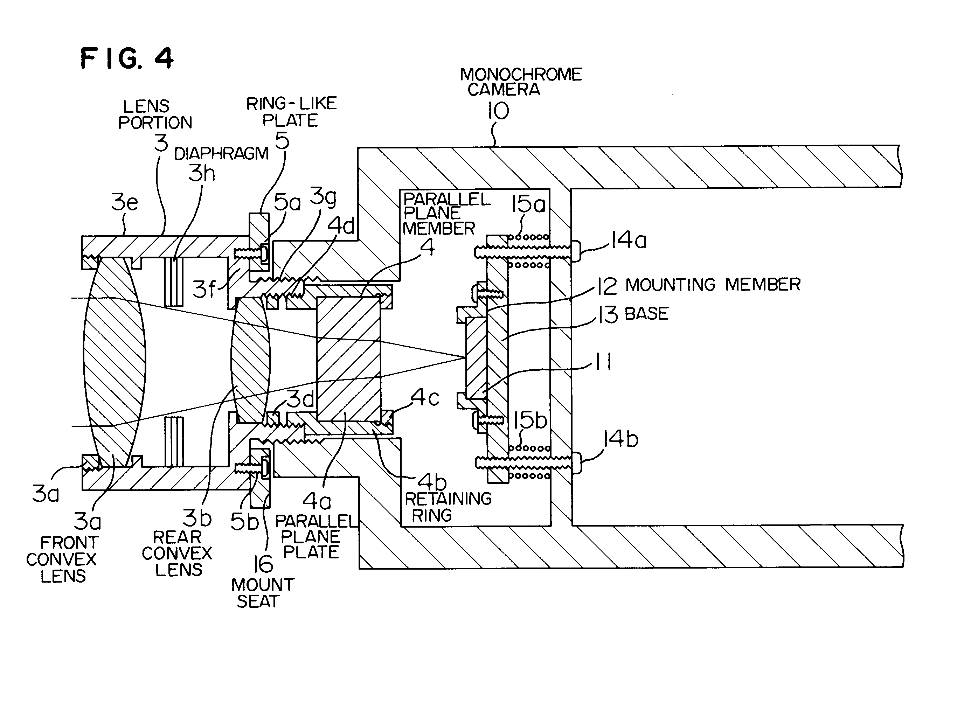

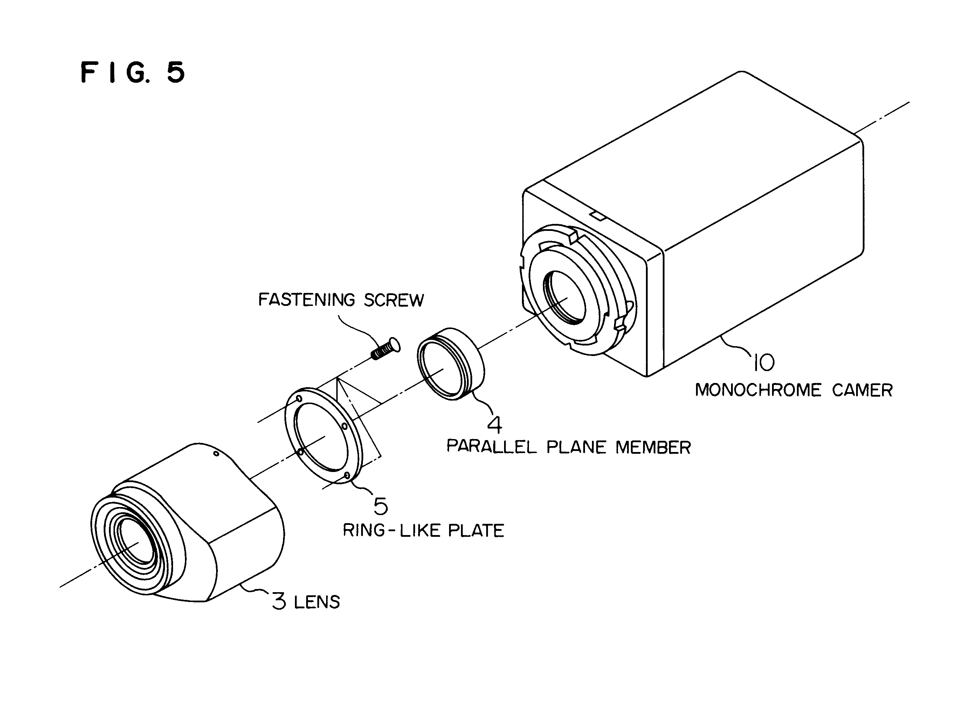

Fig. 4 is a sectional view showing a television camera lens of a second embodiment of the present invention attached to a monochrome camera, and Fig. 5 is an exploded perspective view of the same system. In Fig. 4, 3 denotes a lens portion of a television camera lens whose optical performance is set for a color television camera, and 4 denotes a parallel plane member for correcting a spherical aberration when using the color camera lens in a monochrome camera, and 5 denotes a ring-like plate for correcting a flange-back. The lens portion 3 comprises a front convex lens 3a, a rear convex lens 3b, holder rings 3c, 3d, a diaphragm 3h and a cylindrical chassis portion 3e. The front convex lens 3a and the rear convex lens 3b are fixed to the chassis portion 3e by the holder rings 3c, 3d. The parallel plane member 4 is disposed at the rear side of the lens portion 3, and comprises a transparent parallel plane plate 4a, a retaining ring 4b and a holder ring 4c. The parallel plane plate 4a is fixed to the retaining ring 4b by the holder ring 4c. The parallel plane plate 4 is fitted in the lens portion 3 through a threaded portion 4d. The ring-like plate 5 is in contact with a mount portion 3f of the lens portion 3, and is connected to the lens portion 3 by screws 5a, 5b. 10 denotes a monochrome camera, and 11 denotes a CCD for the monochrome camera. The monochrome camera 10 is fitted on the lens 3 through a threaded portion 3g, and the mount portion 3f is spaced from a mount seat 16 by a distance corresponding to the thickness of the ring-like plate 5. The center of the light receiving surface of the CCD 11 is in alignment with the optical axis of the lens portion 3, and the CCD is fixed in this position by a base 13 and a mounting member 12. The base 13 is mounted on the monochrome camera 10 by a flange-back adjuster which comprises screws 14a, 14b and springs 15a, 15b.

Next, the optical path of the incident light of the above second embodiment will now be described. The light incident on the front convex lens 3e of the lens portion 3 is refracted by the rear convex lens 3b of the lens portion 3 and the plane parallel member 4, and is converged toward the center of the optical axis, and is received by the CCD 11. In this embodiment, however, since there is provided the ring-like plate 5 between the lens portion 3 and the monochrome camera 10, the optical path length up to the CCD 11 is increased by an amount corresponding to the thickness of the ring-like plate 5.

As described for the above prior art, the lens portion 3 is the lens for a color camera, and therefore when the lens portion 3 is attached to the monochrome camera 10 which is not originally provided with a crystal filter and an IR cut filter, the optical performance such as a spherical aberration is degraded. Therefore, the parallel plane member 4 serving as its correction device is provided at the rear side of the lens portion for compensation purposes. In this case, however, the focusing position is displaced by the parallel plane member 4. Here, assuming that the refractive index and the thickness of the parallel plane member 4 are represented by nd and t, respectively, the amount of expansion of the flange-back is represented by $(nd' - 1) \times tg'/nd'$. And, assuming that $nd' = 1.5$ and $tg' = 6$ mm are provided, $(1.5 - 1) \times 6/1.5 = 2$ mm is obtained. Therefore, if the thickness of the ring-like plate 5 is set to 2 mm, the amount of expansion of the flange-back can be compensated for by the thickness of the ring-like plate 5, and as a result even if the flange-back of the monochrome camera 10 remains at 12.5 mm in terms of the conversion in the air, the light incident on the lens portion 3 is caused by the ring-like plate 5 to be focused on the light receiving surface of the CCD, and also the satisfactory optical performance is obtained. When this lens is to be used in the color camera, the parallel plane member 4 is detached from the threaded portion 4d as shown in Fig. 5, and the screws 5a, 5b are detached to remove the ring-like plate 5, and then the lens is used.

In this embodiment, although the ring-like plate is fixed to the lens portion 3 by the screws, it may be fixed using the threaded portion 3a in which case a threaded portion is provided also in the ring-like plate. Alternatively, the ring-like plate may not be connected to the lens portion 3, but may be merely held, as a separate member, between the lens portion 3 and the monochrome camera 10.

INDUSTRIAL APPLICABILITY

As is clear from the above embodiments, the present invention has an advantage that merely by inserting the transparent parallel plane plate at the rear side of the image-pickup lens system, the lens for the color television camera can be used, in its original condition, for the monochrome television camera, without degrading the optical performance.

In the case where the ring-like plate is further mounted on the lens on which the parallel plane member is mounted, for use in the camera, the displacement of the optical focus by the parallel plane member can be corrected by the ring-like plate, and therefore it is not necessary to re-adjust the flange-back of the lens. Therefore, there is provided an advantage that by providing one set of the parallel plane member and the ring-like plate, it can be widely used in any type of camera lens.

**Claims**

1. A lens for a television camera characterized by an image-pickup lens and a transparent parallel plane member having parallel flat surfaces and disposed at a rear side of said image-pickup lens, said television camera lens being able to be used in either of a color camera and a monochrome camera by detaching/attaching said parallel plane member.

2. A lens for a television camera according to claim 1, in which an optical performance of said image-pickup lens is set for the color camera.

3. A lens for a television camera according to claim 1, in which said image-pickup lens and said parallel plane member have threaded portions, respectively, said image-pickup lens and said plane parallel member being connected together by fitting said threaded portions relative to each other.

4. A lens for a television camera characterized by an image-pickup lens, a transparent parallel plane member having parallel flat surfaces and disposed at a rear side of said image-pickup lens, and a ring-like plate, disposed at a portion to which said image-pickup lens is attached, for changing a flange-back of said image-pickup lens, and said television camera lens being able to be used in either of a color camera and a monochrome camera by detaching/attaching said parallel plane member and said ring-like plate, without adjusting the flange-back.

5. A lens for a television camera according to claim 4, in which an optical performance of said image-pickup lens is set for the color camera.

6. A lens for a television camera according to claim 4, in which said image-pickup lens and said parallel plane member have threaded portions, respectively, said image-pickup lens and said parallel plane member being connected together by fitting said threaded portions relative to each other, and said ring-like plate being fixed to said image-pickup lens by screws.

7. A lens for a television camera according to claim 4, in which when nd represents a refractive index of an optical system portion of said parallel plane member, tg represents a plate thickness of said optical system portion, and tp represents a plate thickness of said ring-like plate, there is established the relation,

$$tp = \frac{nd - 1}{nd} \, tg.$$

8. A lens for a television camera characterized by a high-speed image-pickup lens having an F-value of less than 1.0, a transparent parallel plane member disposed at a rear side of said image-pickup lens, and a ring-like plate, disposed at a portion to which said image-pickup lens is attached, for changing a flange-back of said image-pickup lens, and said television camera lens being able to be used in either of color camera and monochrome camera by detaching/attaching said parallel plane member and said ring-like plate, without adjusting the flange-back.

9. A lens for a television camera according to claim 8, in which an optical performance of said image-pickup lens is set for the color camera.

10. A lens for a television camera according to claim 8, in which said image-pickup lens and said parallel plane member have threaded portions, respectively, said image-pickup lens and said parallel plane member being connected together by fitting said threaded portions relative to each other, and said ring-like plate being fixed to said image-pickup lens by screws.

11. A lens for a television camera according to claim 8, in which when nd represents a refractive index of an optical system portion of said parallel plane member, tg represents a plate thickness of said optical system portion, and tp represents a plate thickness of said ring-like plate, there is established the relation,

$$tp = \frac{nd - 1}{nd} \, tg.$$

# FIG. 1

DIAPHRAGM
1c

LENS PORTION
1

PARALLEL
PLANE
MEMBER
2

MONOCHROME
CAMERA
10

15a

1f

2d

14a

12 MOUNTING
MEMBER

13 BASE

11

2c

1e

2b
RETAINING
RING

14b

1d

1a
FRONT
CONVEX
LENS

16
MOUNT
SEAT

1b
REAR
CONVEX
LENS

2a
PARALLEL
PLANE
PLATE

15b

EP 0 526 636 A1

# FIG. 2

MONOCHROME CAMERA

PARALLEL PLANE MEMBER

LENS PORTION

FIG. 3

COLOR CAMERA 20

LENS PORTION

1

1f

MOUNT SEAT 16

24a

22 MOUNTING MEMBER

23 BASE

21 CCD

24b

25 CRYSTAL FILTER

26 IR CUT FILTER

# FIG. 4

LENS PORTION 3
DIAPHRAGM 3h
RING-LIKE PLATE 5
MONOCHROME CAMERA 10
3e
5a 3g
4d
PARALLEL PLANE MEMBER 4
15a
14a
3f
12 MOUNTING MEMBER
13 BASE
11
4c
3d
15b
14b
4b RETAINING RING
3a
3a
FRONT CONVEX LENS
3b
REAR CONVEX LENS
5b
4a PARALLEL PLANE PLATE
16 MOUNT SEAT

EP 0 526 636 A1

# FIG. 5

FASTENING SCREW

4 PARALLEL PLANE MEMBER

5 RING-LIKE PLATE

3 LENS

10 MONOCHROME CAMER

EP 0 526 636 A1

# F I G. 6

10 MONOCHROME CAMERA

LENS
6   DIAPHRAGM
    6c

6d

15a
14a

12 MOUNTING MEMBER

13 BASE

11 CCD

14b
15b

6a
FRONT
CONVEX
LENS

16
MOUNT
SEAT

6b
REAR
CONVEX
LENS

EP 0 526 636 A1

# F I G. 7

COLOR CAMERA
20

7   7c   7d

24a

25a

IR CUT
FILTER
26

22 MOUNTING MEMBER

23 BASE

21 CCD

25

25b

CRYSTAL
FILTER

24b

7a
FRONT
CONVEX
LENS

7b
REAR
CONVEX
LENS

EP 0 526 636 A1

14

# F I G. 8

# INTERNATIONAL SEARCH REPORT

International Application No PCT/JP91/00243

**I. CLASSIFICATION OF SUBJECT MATTER** (if several classification symbols apply, indicate all) [6]

According to International Patent Classification (IPC) or to both National Classification and IPC

Int. Cl$^5$   H04N5/225, 5/232, 9/04, G02B27/46, G03B17/14

**II. FIELDS SEARCHED**

| Minimum Documentation Searched [7] | |
|---|---|
| Classification System | Classification Symbols |
| IPC | H04N5/225, 5/232, G02B27/46, G03B17/14 |

Documentation Searched other than Minimum Documentation
to the Extent that such Documents are Included in the Fields Searched [8]

Jitsuyo Shinan Koho             1958 – 1990
Kokai Jitsuyo Shinan Koho       1973 – 1990

**III. DOCUMENTS CONSIDERED TO BE RELEVANT** [9]

| Category* | Citation of Document, [11] with indication, where appropriate, of the relevant passages [12] | Relevant to Claim No. [13] |
|---|---|---|
| Y | JP, U, 55-71313 (Fuji Photo Film Co., Ltd.), May 16, 1980 (16. 05. 80), (Family: none) | 1-11 |
| Y | JP, A, 54-73025 (Minolta Camera Co., Ltd.), June 12, 1979 (12. 06. 79), (Family: none) | 1-11 |
| Y | JP, A, 51-151537 (Minolta Camera Co., Ltd.), December 27, 1976 (27. 12. 76), (Family: none) | 1-11 |

\* Special categories of cited documents: [10]

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 15, 1991 (15. 04. 91) | May 13, 1991 (13. 05. 91) |
| International Searching Authority | Signature of Authorized Officer |
| Japanese Patent Office | |

Form PCT/ISA/210 (second sheet) (January 1985)